# EUROPÄISCHE PATENTSCHRIFT

(11) **EP 3 224 480 B1**
(45) Veröffentlichungstag und Bekanntmachung des Hinweises auf die Patenterteilung: **05.07.2023**
(21) Anmeldenummer: 15775145.4
(22) Anmeldetag: 28.09.2015
(51) Int. Cl.: F04D 17/12, F04D 29/16, F04D 29/10, F04D 29/42, F16J 15/447

(54) **VERDICHTER MIT EINEM DICHTKANAL**
COMPRESSOR HAVING A SEALING CHANNEL
COMPRESSEUR POURVU D'UN CONDUIT ÉTANCHE

(30) Priorität: 27.11.2014 DE 102014224285
(43) Veröffentlichungstag der Anmeldung: 04.10.2017
(73) Patentinhaber: Robert Bosch GmbH, 70442 Stuttgart (DE)
(72) Erfinder: CLAY, Alister, 35102 Lohra (DE)
(86) Internationale Anmeldenummer: PCT/EP2015/072263
(87) Internationale Veröffentlichungsnummer: WO 2016/082980

(56) Entgegenhaltungen:
- WO-A1-00/01935
- DE-A1-102013 201 771
- JP-A- 2012 251 528
- US-A1- 2011 182 719
- US-B2- 7 568 883

## Beschreibung

Die Erfindung betrifft einen Verdichter gemäß Patentansprüche 1 und 2.

### Stand der Technik

Im Stand der Technik ist aus DE 10 2012 012 540 A1 ein Turboverdichter bekannt, der eine erste Verdichterstufe mit einem ersten Verdichterrad und eine zweite Verdichterstufe mit einem zweiten Verdichterrad aufweist. Das erste und das zweite Verdichterrad sind auf einer gemeinsamen Welle angeordnet und die Welle ist berührungsfrei gelagert. Zwischen der ersten und der zweiten Verdichterstufe ist ein Dichtspalt ausgebildet. Zur Abdichtung des Dichtspaltes ist eine Nut im Gehäuse vorgesehen. Zudem weist das Verdichterrad einen Flansch auf, der in die Nut eingreift.

Aus JP 2012 251528 A, US7568883 B2 und US 2011/182719 A1 sind Verdichter mit einem Gehäuse und einem Rotor mit zwei Verdichterstufen bekannt, wobei zwischen den zwei Verdichterstufen ein Dichtspalt mit einer Abdichtung vorgesehen ist.

Aus WO 00/01935 A1 ist ein Turbolader mit einem Verdichter mit einem Gehäuse und einem Rotor bekannt, wobei der Rotor zwei Verdichterräder aufweist, wobei die zwei Verdichterräder jeweils in einer Verdichterkammer angeordnet sind. Zwischen den zwei Verdichterkammern ist ein Dichtkanal ausgebildet. Der Dichtkanal wird mit einem Dichtelement abgedichtet, das zwischen Gehäuse und dem Rotor angeordnet ist.

### Offenbarung der Erfindung

Die Aufgabe der Erfindung besteht darin, einen Verdichter bereitzustellen, der eine verbesserte Abdichtung des Dichtkanals aufweist.

Die Aufgabe der Erfindung wird durch den Verdichter gemäß Patentanspruch 1 und Patentanspruch 2 gelöst. Weitere Ausführungsformen der Erfindung sind in den abhängigen Ansprüchen angegeben.

Der vorgeschlagene Verdichter weist den Vorteil auf, dass die Ausbildung des Dichtkanals zwischen einer zweiten Verdichterkammer und einer ersten Verdichterkammer mit einem niedrigeren Druck verbessert ist. Insbesondere ist eine axiale Kraft auf den Rotor reduziert. Zudem ist die Leckage über den Dichtkanal reduziert. Weiterhin ist der Drehwiderstand des Rotors relativ gering. Diese Vorteile werden dadurch erreicht, dass der Dichtkanal einen Drosselabschnitt aufweist, wobei der Drosselabschnitt näher am Niederdruckbereich einer ersten Verdichterkammer als an der zweiten Verdichtungskammer angeordnet ist.

In einer Ausführungsform ist der Drosselabschnitt in einem ersten Drittel einer zweiten Hälfte des Dichtkanals angrenzend an die Mittenebene des Dichtkanals angeordnet. Versuche haben gezeigt, dass die Anordnung des Drosselabschnitts in diesem Abschnitt relativ zu einer Mittenebene des Dichtkanals gute Ergebnisse liefert.

In einer weiteren Ausführungsform ist die Dichtkante, die beispielsweise durch das Gehäuse oder den Rotor oder ein Dichtelement des Gehäuses oder des Rotors gebildet wird, unsymmetrisch in Bezug auf die Mittenebene des Dichtkanals ausgebildet. Auf diese Weise wird die Ausbildung bzw. die Verschiebung des Drosselabschnitts in Richtung auf den Niederdruckbereich mit einfachen Mitteln erreicht.

In einer weiteren Ausführungsform ist die Nut in Bezug auf eine Mittenebene des Dichtkanals in der Weise unsymmetrisch ausgebildet, dass der Drosselabschnitt näher am Niederdruckbereich angeordnet ist.

In einer weiteren Ausführungsform wird die ringförmige Nut in der Ebene der Drehachse auf gegenüberliegenden Seiten von zwei Schultern begrenzt. Eine erste Schulter, die auf einer Seite mit höherem Druck angeordnet ist, ist senkrecht zur Drehachse höher ausgebildet als die zweite Schulter. Auch dadurch wird eine Verbesserung des Druckabfalls über den Dichtkanal erreicht.

Die Erfindung wird anhand der Figuren näher erläutert. Es zeigen:
Figur 1 eine erste Ausführungsform eines Verdichters mit einem Rotor mit einem Verdichterrad;
Figur 2 eine zweite Ausführungsform eines Verdichters mit einem Rotor mit zwei Verdichterrädern;
Figur 3 einen schematischen Querschnitt durch den Verdichter in der Ebene der Drehachse im Bereich des Dichtkanals;
Figur 4 eine schematische Darstellung der Querschnittsfläche entlang dem Dichtkanal;
Figur 5 einen schematischen Teilausschnitt einer weiteren Ausführungsform eines Verdichters im Bereich des Dichtkanals;
Figur 6 eine schematische Darstellung der Querschnittsfläche des Dichtkanals der Ausführungsform der Figur 5;
Figur 7 eine schematische Darstellung einer weiteren Ausführungsform eines Verdichters, die nicht Teil der Erfindung ist; und
Figur 8 eine schematische Teilschnittdarstellung einer weiteren Ausführungsform eines Verdichters.

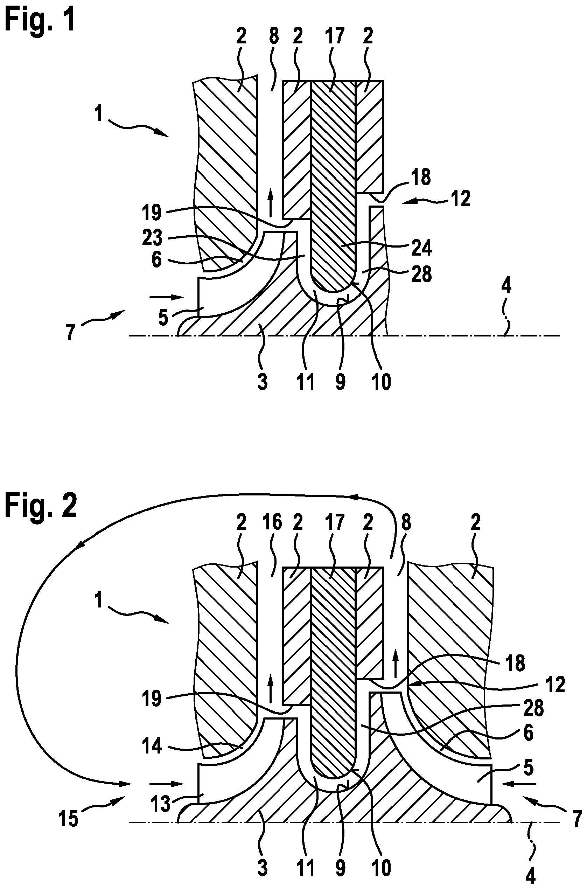

Fig. 1 zeigt einen schematischen Querschnitt durch einen Teil eines Verdichters 1, der ein Gehäuse 2 und einen Rotor 3 aufweist. Der Rotor 3 und das Gehäuse 2 sind rotationssymmetrisch zu einer Drehachse 4 ausgebildet. Der Rotor 3 weist auf einer ersten Seite ein erstes Verdichterrad 5 mit Laufschaufeln auf. Zwischen dem ersten Verdichterrad 5 und dem Gehäuse 2 ist eine erste Verdichterkammer 6 ausgebildet. Die erste Verdichterkammer 6 weist in dem dargestellten

Ausführungsbeispiel einen ringförmigen ersten Ansaugkanal 7 auf. Dreht sich der Rotor 3 um die Drehachse 4, so wird ein Medium über den ersten Ansaugkanal 7 angesaugt, durch das erste Verdichterrad 5 verdichtet und über einen ersten Verdichtungskanal 8 abgegeben. Zwischen einer radialen Außenseite 9 des Rotors 3 und einer zugeordneten Innenseite 10 des Gehäuses 2 ist ein Dichtkanal 11 ausgebildet, der die erste Verdichterkammer 6 mit einem Bereich mit einem niedrigeren Druck 12 verbindet. Der Rotor 3 kann über ein berührungsloses Lager im Gehäuse 2 beispielsweise im Bereich des Dichtkanals 11 drehbar gelagert sein. Zudem kann abhängig von der gewählten Ausführungsform der Rotor 3 mit einer nicht dargestellten Welle verbunden sein, die in der Drehachse 4 angeordnet ist und drehbar am Gehäuse 2 gelagert ist. In der dargestellten Ausführungsform weist das Gehäuse 2 ein Dichtelement 17 auf, das einen Teilabschnitt der Innenseite 10 des Gehäuses 2 bildet. Das Dichtelement 17 weist die Form eines ringförmigen Steges 24 auf, der in eine ringförmige Nut 28 des Rotors 3 eingreift. Der Steg 24 wird seitlich von zwei ringförmigen Schultern 18, 19 begrenzt ist. Die erste Schulter 18 grenzt an einen Niederdruckbereich 12 an. Die zweite Schulter 19 grenzt an einen Hochdruckbereich 6 an. Die erste Schulter 18 weist einen größeren radialen Abstand von der Drehachse als die zweite Schulter 19 auf.

Abhängig von der gewählten Ausführung kann auch der Rotor 3 auf seiner Außenseite 9 einen ringförmigen Steg aufweisen, der in eine ringförmige Nut des Gehäuses 2 eingreift. Zudem kann auch der Steg durch ein Material des Gehäuses 2 bzw. des Rotors 3 gebildet sein und insbesondere einteilig mit dem Gehäuse 2 bzw. dem Rotor 3 ausgebildet sein.

Fig. 2 zeigt eine Ausführungsform eines Verdichters 1, der gemäß dem Verdichter der Fig. 1 aufgebaut ist, wobei jedoch der Rotor 3 auf einer zweiten Seite ein zweites Verdichterrad 13 mit zweiten Laufschaufeln aufweist. Zudem ist zwischen dem zweiten Verdichterrad 13 und dem Gehäuse 2 eine zweite Verdichterkammer 14 ausgebildet. Weiterhin weist die zweite Verdichterkammer 14 einen zweiten ringförmigen Ansaugkanal 15 auf. Zudem ist ein zweiter Verdichtungskanal 16 im Gehäuse 2 vorgesehen. Das zweite Verdichterrad 13 ist rotationssymmetrisch zur Drehachse 4 ausgebildet. Die zweite Verdichterkammer 14 ist über den Dichtkanal 11 mit der ersten Verdichterkammer 6 verbunden. Zudem kann der zweite Ansaugkanal 15 mit dem ersten Verdichtungskanal 8 über eine Leitung in Verbindung stehen, die mit einem Pfeil schematisch angedeutet ist. Auf diese Weise können zwei Verdichterstufen mithilfe eines Rotors 3 in einem Verdichters 1 realisiert werden. Durch das erste Verdichterrad 5 wird eine Vorverdichtung des Mediums erreicht, wobei durch das zweite Verdichterrad 13 eine zweite höhere Verdichtung des vorverdichteten Mediums erreicht wird, das anschließend über den zweiten Verdichtungskanal 16 abgegeben wird. In der dargestellten Ausführungsform weist das Gehäuse 2 ein Dichtelement 17 auf, das einen Teilabschnitt der Innenseite 10 des Gehäuses 2 bildet. Das Dichtelement 17 weist die Form eines ringförmigen Steges 24 auf, der in eine ringförmige Nut 28 des Rotors 3 eingreift. Abhängig von der gewählten Ausführung kann auch der Rotor 3 auf seiner Außenseite 9 einen ringförmigen Steg aufweisen, der in eine ringförmige Nut des Gehäuses 2 eingreift. Zudem kann auch der Steg durch ein Material des Gehäuses 2 bzw. des Rotors 3 gebildet sein und insbesondere einteilig mit dem Gehäuse 2 bzw. dem Rotor 3 ausgebildet sein.

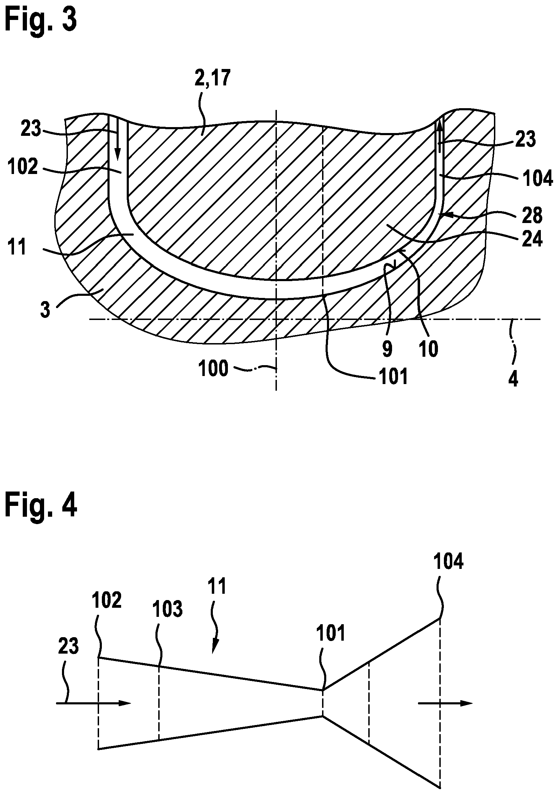

Figur 3 zeigt in einer vergrößerten Teilquerschnittsdarstellung den Dichtkanal 11 eines Verdichters 1, der gemäß den Ausführungsformen der Figur 1 und Figur 2 ausgebildet sein kann. In der Figur 3 ist eine Mittenebene 100 für die Mitte der Nut 28 eingezeichnet. Die Mittenebene bezeichnet die Mitte des Dichtkanals 11. Zudem ist mit einer gestrichelten Linie eine Engstelle 101 eingezeichnet. Die Engstelle 101 bezeichnet in einer Strömungsrichtung 23 ausgehend von einer Seite mit höherem Druck 102 zu einer Seite mit niedrigerem Druck 104 den Bereich, in dem die Querschnittsfläche des Dichtkanals 11 den kleinsten Querschnitt aufweist. Die Engstelle 101 ist gegenüber der Mittenebene 100 in Richtung auf die Seite mit dem niedrigeren Druck 104 verschoben.

Figur 4 zeigt in einer schematischen Darstellung den Verlauf der Größe der Querschnittsfläche 103 des Dichtkanals 11 in der Strömungsrichtung 23. Die Größe der Querschnittsfläche ist durch die zweidimensionale Breite des Dichtkanals 11 dargestellt. Ausgehend von einer Hochdruckseite 102 nimmt die Querschnittsfläche 103 des Dichtkanals 11 in der Strömungsrichtung 23 in Richtung auf die Engstelle 101 kontinuierlich ab. Nach der Engstelle 101 nimmt die Querschnittsfläche 103 des Dichtkanals 11 in Richtung auf eine Niederdruckseite 103 kontinuierlich zu. Die Hochdruckseite 102 entspricht dem Eingang am Dichtkanal 11 und die Niederdruckseite 103 entspricht dem Ausgang am Dichtkanal 11. Durch die Verschiebung der Engstelle 101 in Richtung auf die Niederdruckseite 103 wird eine verbesserte Abdichtung bei gleichzeitig geringerem Druck und geringerem Widerstand für die Drehung des Rotors erreicht. Eine optimale Position für die Engstelle 101 hängt von den Dimensionen des Dichtkanals 11, der Länge des Dichtkanals 11 und dem Druckunterschied zwischen der Hochdruckseite 102 und der Niederdruckseite 103 ab. Eine optimale Position für die Engstelle 101 ist somit experimentell für jeden Typ Verdichter zu ermitteln.

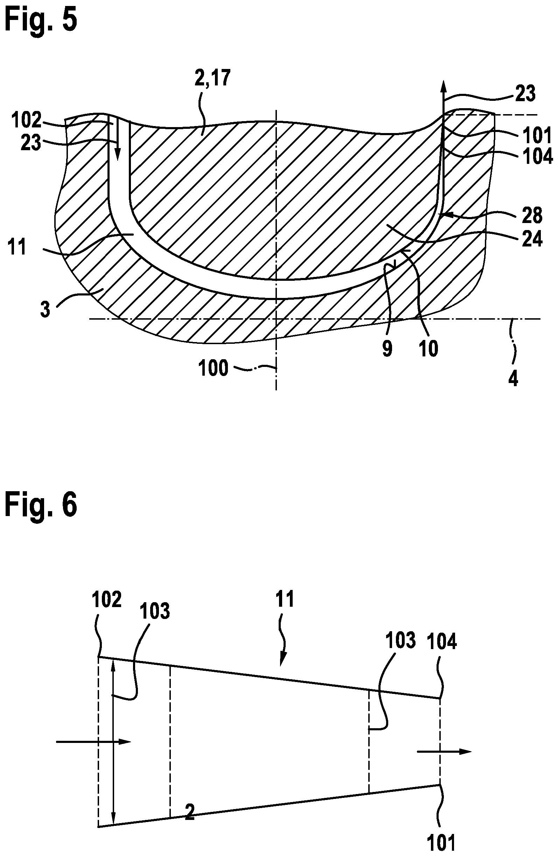

Figur 5 zeigt in einer vergrößerten schematischen Teilquerschnittsdarstellung eine weitere Ausführungsform eines Verdichters 1 mit einem Dichtkanal 11, der gemäß den Ausführungsformen der Figuren 1 und 2 ausgebildet sein kann. Bei dieser Ausführungsform ist der Dichtkanal 11 in der Weise ausgebildet, dass die Engstelle 101 am Ende des Dichtkanals auf der Niederdruckseite 104 angeordnet ist.

Figur 6 zeigt eine zweidimensionale Darstellung der Querschnittsfläche 103 des Dichtkanals 11 der Figur 5. Dabei ist zu erkennen, dass die Querschnittsfläche 103 kontinuierlich von der Hochdruckseite 102 in Richtung auf die Niederdruckseite 104 abnimmt. Bei dieser Ausführungsform wird eine Verbesserung des Druckabfalls bei gleichzeitiger Reduzierung der Leckage oder Kräfte auf den Rotor erreicht.

Die in den Figuren 3 bis 6 schematisch dargestellte Verschiebung der Engstelle 101 aus einer Mittenebene 100, 128 in Richtung auf die Niederdruckseite 104 kann mit Hilfe verschiedener Ausführungsformen erreicht werden.

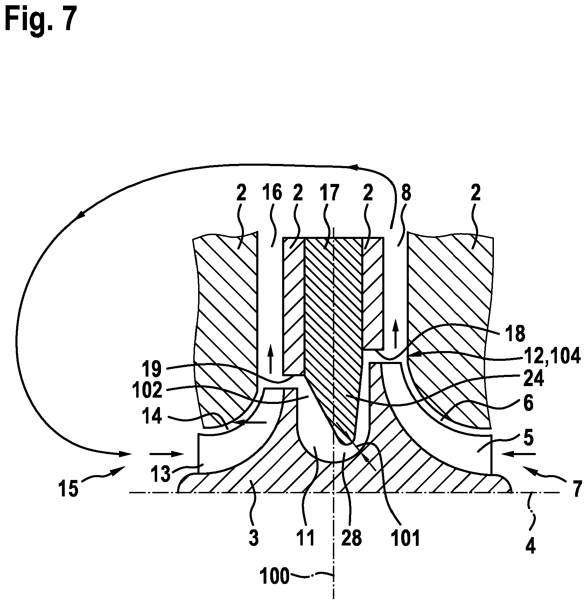

Figur 7 zeigt eine erste Ausführungsform eines Verdichters 1, der im Wesentlichen gemäß Figur 2 ausgebildet ist. Im Gegensatz zu Fig. 2 weist jedoch die Innenseite 10 des Gehäuses 2 in einem Querschnitt zur Drehachse 4 in Bezug auf die Mittenebene 100 der Nut 28 eine asymmetrische Form auf. Der Steg 24 kann durch das Gehäuse 2 wenigstens teilweise durch ein Dichtelement 17 realisiert sein. In der dargestellten Ausführungsform ist der Steg 24 durch ein Dichtelement 17 realisiert. Durch die asymmetrische Ausbildung des Stegs 24 wird eine Verschiebung der Engstelle 101 gemäß der Figur 3 erreicht. Abhängig von der gewählten Kontur des Stegs 24 kann die Engstelle an eine gewünschte Position in Richtung auf die Niederdruckseite 104 verschoben werden.

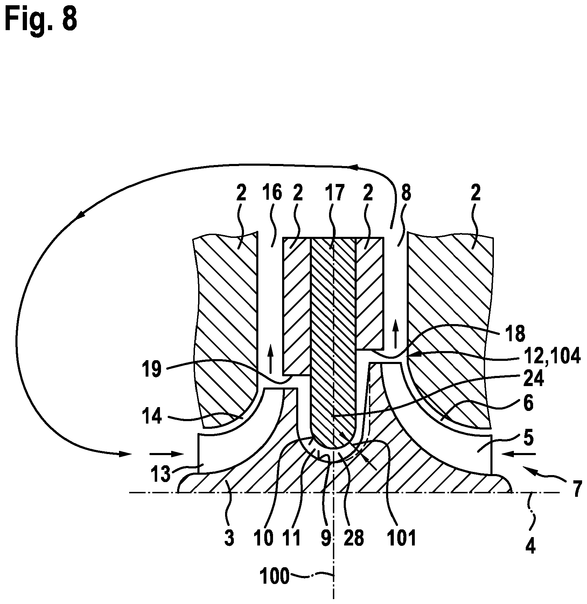

Figur 8 zeigt eine weitere Ausführungsform eines Verdichters 1, der im Wesentlichen gemäß Figur 2 ausgebildet ist. Im Gegensatz zu Fig. 2 ist jedoch die Engstelle ebenfalls gemäß der Figur 3 verschoben. Bei dieser Ausführungsform weist der Steg 24 in einem Querschnitt durch die Ebene der Drehachse 4 in Bezug auf die Mittenebene 100 eine spiegelsymmetrische Kontur auf der Innenseite 10 auf. Bei dieser Ausführungsform ist die Außenseite 9 des Rotors 3 unsymmetrisch in Bezug auf die Mittenebene 100 ausgebildet. Auf dem Abschnitt des Dichtkanals 11, der von der Mittenebene 100 in Richtung auf den Niederdruckbereich 104 angeordnet ist, weist die Außenseite 9 der Nut 28 einen größeren radialen Abstand zur Drehachse 4 als eine spiegelsymmetrische Seite der Nut 28 aufweisen würde. Eine spiegelsymmetrische Ausführungsform der Nut 28 ist in Form einer gestrichelten Linie dargestellt. Somit kann auch durch die Form der Kontur die Außenseite 9 auf der Seite des Rotors 3, d.h. durch eine entsprechende Ausbildung der Nut 28 eine Engstelle 101 aus der Mittenebene 100 in Richtung auf die Niederdruckseite 104 verschoben werden.

Abhängig von der gewählten Ausführungsform können auch Kombinationen zwischen der Figur 7 und der Figur 8 gewählt werden, so dass weder die Nut 28 noch der Steg 24 spiegelsymmetrisch zur Mittenebene 100 ausgebildet ist, um die Engstelle 101 aus der Mittenebene 100 in Richtung auf die Niederdruckseite 104 zu verschieben. Eine Ausführungsform, bei der Fig. 7 und Fig. 8 kombiniert werden, gehört nicht zur Erfindung.

In den dargestellten Ausführungsformen der Fig. 7 und 8 weist das Gehäuse 2 ein Dichtelement 17 auf, das einen Teilabschnitt der Innenseite 10 des Gehäuses 2 bildet. Das Dichtelement 17 weist die Form eines ringförmigen Steges 24 auf, der in eine ringförmige Nut 28 des Rotors 3 eingreift. Abhängig von der gewählten Ausführung kann auch der Rotor 3 auf seiner Außenseite 9 einen ringförmigen Steg aufweisen, der in eine ringförmige Nut des Gehäuses 2 eingreift. Zudem kann auch der Steg durch ein Material des Gehäuses 2 bzw. des Rotors 3 gebildet sein und insbesondere einteilig mit dem Gehäuse 2 bzw. dem Rotor 3 ausgebildet sein. Zudem kann sowohl am Rotor 3 als auch am Gehäuse 2 ein entsprechendes Dichtelement vorgesehen sein, wobei die Dichtelemente den Dichtkanal radial begrenzen.

## Patentansprüche

1. Verdichter (1) mit einem Gehäuse (2) und mit einem Rotor (3), wobei der Rotor (3) wenigstens auf einer Seite ein erstes Verdichterrad (5) aufweist, wobei der Rotor (3) auf einer zweiten Seite ein zweites Verdichterrad (13) aufweist, wobei zwischen den Verdichterrädern (5, 13) und dem Gehäuse (2) jeweils eine Verdichterkammer (6, 14) ausgebildet ist, wobei der Rotor (3) drehbar um eine Drehachse (4) gelagert ist, wobei zwischen dem Rotor (3) und dem Gehäuse (2) ein ringförmiger Dichtkanal (11) ausgebildet ist, wobei der Dichtkanal (11) von der zweiten Verdichterkammer (14) zu der ersten Verdichterkammer (6) mit einem niedrigeren Druck (2, 104) geführt ist, wobei im Dichtkanal (11) ein Drosselabschnitt (101) vorgesehen ist, wobei der Drosselabschnitt (101) näher am Niederdruckbereich (12, 104) der ersten Verdichterkammer (6) als an der zweiten Verdichtungskammer (14) angeordnet ist, wobei auf einer ersten Seite des Rotors (3) das erste Verdichterrad (5) ausgebildet ist, wobei auf einer zweiten Seite des Rotors (3) das zweite Verdichterrad (13) ausgebildet ist, wobei das erste Verdichterrad (5) und das zweite Verdichterrad (13) eine erste Verdichterstufe und eine zweite Verdichterstufe darstellen, wobei ausgehend von einer Hochdruckseite (102) die Querschnittsfläche (103) des Dichtkanals (11) in der Strömungsrichtung (23) in Richtung auf den Drosselabschnitt (101) kontinuierlich abnimmt und nach dem Drosselabschnitt (101) die Querschnittsfläche (103) des Dichtkanals (11) in Richtung auf eine Niederdruckseite (104) kontinuierlich zunimmt.

2. Verdichter (1) mit einem Gehäuse (2) und mit einem Rotor (3), wobei der Rotor (3) wenigstens auf einer Seite ein erstes Verdichterrad (5) aufweist, wobei der Rotor (3) auf einer zweiten Seite ein zweites Verdichterrad (13) aufweist, wobei zwischen den Verdichterrädern (5, 13) und dem Gehäuse (2) jeweils eine Verdichterkammer (6, 14) ausgebildet ist, wobei der Rotor (3) drehbar um eine Drehachse (4) gelagert ist, wobei zwischen dem Rotor (3) und dem Gehäuse (2) ein ringförmiger Dichtkanal (11) ausgebildet ist, wobei der Dichtkanal (11) von der zweiten Verdichterkammer (14) zu der ersten Verdichterkammer (6) mit einem niedrigeren Druck (2, 104) geführt ist, wobei im Dichtkanal (11) ein Drosselabschnitt (101) vorgesehen ist, wobei der Drosselabschnitt (101) näher am Niederdruckbereich (12, 104) der ersten Verdichterkammer (6) als an der zweiten Verdichtungskammer (14) angeordnet ist, wobei auf einer ersten Seite des Rotors (3) das erste Verdichterrad (5) ausgebildet ist, wobei auf einer zweiten Seite des Rotors (3) das zweite Verdichterrad (13) ausgebildet ist, wobei das erste Verdichterrad (5) und das zweite Verdichterrad (13) eine erste Verdichterstufe und eine zweite Verdichterstufe darstellen, wobei der Dichtkanal (11) in der Weise ausgebildet ist, dass der Drosselabschnitt (101) am Ende des Dichtkanals (11) auf der Niederdruckseite (104) angeordnet ist und die Querschnittsfläche (103) des Dichtkanals (11) kontinuierlich von einer Hochdruckseite (102) in Richtung auf die Niederdruckseite (104) abnimmt.

3. Verdichter nach Anspruch 1, wobei der Drosselabschnitt (101) angrenzend an die Mitte (100) des Dichtkanals (11) in einem ersten Drittel einer zweiten Hälfte des Dichtkanals (11) näher an dem Niederdruckbereich (104) angeordnet ist.

4. Verdichter nach einem der vorhergehenden Ansprüche, wobei der Rotor (3) im Dichtkanal (11) eine umlaufende Nut (28) aufweist, wobei das Gehäuse einen umlaufenden Steg (24) aufweist, wobei der Steg (24) in die umlaufende Nut (28) eingreift, und wobei der Steg (24) und/oder die Nut (28) in Bezug auf eine Mittenebene (100) der Nut (28) in der Weise unsymmetrisch ausgebildet sind, dass der Drosselabschnitt (101) näher am Niederdruckbereich (104) angeordnet ist.

5. Verdichter nach einem der Ansprüche 1 bis 3, wobei das Gehäuse (2) eine umlaufende Nut (28) aufweist, wobei der Rotor (3) einen umlaufenden Steg (24) aufweist, wobei der Steg (24) in die umlaufende Nut (28) eingreift, wobei zwischen Steg (24) und Nut (28) der Dichtkanal (11) gebildet ist, und wobei der Steg (24) und/oder die Nut (28) in Bezug auf eine Mittenebene der Nut in der Weise unsymmetrisch ausgebildet sind, dass der Drosselabschnitt (101) näher am Niederdruckbereich (12, 104) angeordnet ist.

6. Verdichter nach einem der Ansprüche 4 oder 5, wobei der Steg (24) seitlich von zwei ringförmigen Schultern (18, 19) begrenzt ist, wobei die erste Schulter (18) an einen Niederdruckbereich (104) angrenzt, wobei die zweite Schulter (19) an einen Hochdruckbereich (6, 102) angrenzt, wobei die erste Schulter (18) einen größeren radialen Abstand von der Drehachse (4) als die zweite Schulter (19) aufweist.

7. Verdichter nach einem der vorhergehenden Ansprüche, wobei der Rotor (3) berührungsfrei drehbar an einem Lager gelagert ist, wobei das Lager zwischen dem Gehäuse und dem Rotor im Bereich des Dichtkanals (11) ausgebildet ist.

8. Verdichter nach einem der vorhergehenden Ansprüche, wobei wenigstens ein Teil des Gehäuses (2) und/oder des Rotors (3), der an den Dichtkanal (11) angrenzt in Form eines Dichtelements (17) ausgebildet ist, wobei das Dichtelement (17) aus einem weicheren Material als das Gehäuse (2) oder der Rotor (3) ausgebildet sind.

9. Verdichter nach einem der vorhergehenden Ansprüche, wobei in einem Querschnitt durch die Drehachse (4) das Gehäuse (2) und/oder der Rotor (3) im Bereich des Dichtkanals (11) eine asymmetrische Form in Bezug auf eine Mittenebene (100) des Dichtkanals (11) aufweist.

## Claims

1. Compressor (1) having a housing (2) and having a rotor (3), wherein the rotor (3) has a first compressor wheel (5) at least on one side, wherein the rotor (3) has a second compressor wheel (13) on a second side, wherein a compressor chamber (6, 14) is formed in each case between the compressor wheels (5, 13) and the housing (2), wherein the rotor (3) is mounted so as to be rotatable about an axis of rotation (4), wherein an annular sealing channel (11) is formed between the rotor (3) and the housing (2), wherein the sealing channel (11) is routed from the second compressor chamber (14) to the first compressor chamber (6) having a lower pressure (2, 104), wherein a throttle portion (101) is provided in the sealing channel (11), wherein the throttle portion (101) is arranged closer to the low-pressure region (12, 104) of the first compressor chamber (6) than to the second compressor chamber (14), wherein the first compressor wheel (5) is formed on a first side of the rotor (3), wherein the second compressor wheel (13) is formed on a second side of the rotor (3), wherein the first compressor wheel (5) and the second compressor wheel (13) represent a first compressor stage and a second compressor stage, wherein, starting from a high-pressure side (102), the cross-sectional area (103) of the sealing channel (11) continuously decreases in the flow direction (23) in the direction of the throttle portion (101) and, downstream of the throttle portion (101), the cross-sectional area (103) of the sealing channel (11) continuously increases in the direction of a low-pressure side (104).

2. Compressor (1) having a housing (2) and having a rotor (3), wherein the rotor (3) has a first compressor wheel (5) at least on one side, wherein the rotor (3) has a second compressor wheel (13) on a second side, wherein a compressor chamber (6, 14) is formed in each case between the compressor wheels (5, 13) and the housing (2), wherein the rotor (3) is mounted so as to be rotatable about an axis of rotation (4), wherein an annular sealing channel (11) is formed between the rotor (3) and the housing (2), wherein the sealing channel (11) is routed from the second compressor chamber (14) to the first compressor chamber (6) having a lower pressure (2, 104), wherein a throttle portion (101) is provided in the sealing channel (11), wherein the throttle portion (101) is arranged closer to the low-pressure region (12, 104) of the first compressor chamber (6) than to the second compressor chamber (14), wherein the first compressor wheel (5) is formed on a first side of the rotor (3), wherein the second compressor wheel (13) is formed on a second side of the rotor (3), wherein the first compressor wheel (5) and the second compressor wheel (13) represent a first compressor stage and a second compressor stage, wherein the sealing channel (11) is formed in such a way that the throttle portion (101) is arranged at the end of the sealing channel (11) on the low-pressure side (104) and the cross-sectional area (103) of the sealing channel (11) decreases continuously from a high-pressure side (102) in the direction of the low-pressure side (104).

3. Compressor according to Claim 1, wherein the throttle portion (101) is arranged closer to the low-pressure region (104) adjoining the centre (100) of the sealing channel (11) in a first third of a second half of the sealing channel (11).

4. Compressor according to one of the preceding claims, wherein the rotor (3) has a peripheral groove (28) in the sealing channel (11), wherein the housing has a peripheral web (24), wherein the web (24) engages in the peripheral groove (28), and wherein the web (24) and/or the groove (28) are or is formed asymmetrically with respect to a centre plane (100) of the groove (28) in such a way that the throttle portion (101) is arranged closer to the low-pressure region (104).

5. Compressor according to one of Claims 1 to 3, wherein the housing (2) has a peripheral groove (28), wherein the rotor (3) has a peripheral web (24), wherein the web (24) engages in the peripheral groove (28), wherein the sealing channel (11) is formed between the web (24) and groove (28), and wherein the web (24) and/or the groove (28) are or is formed asymmetrically with respect to a centre plane of the groove in such a way that the throttle portion (101) is arranged closer to the low-pressure region (12, 104).

6. Compressor according to either of Claims 4 and 5, wherein the web (24) is delimited laterally by two annular shoulders (18, 19), wherein the first shoulder (18) adjoins a low-pressure region (104), wherein the second shoulder (19) adjoins a high-pressure region (6, 102), wherein the first shoulder (18) has a greater radial distance from the axis of rotation (4) than the second shoulder (19).

7. Compressor according to one of the preceding claims, wherein the rotor (3) is mounted on a bearing so as to be rotatable in a contactless manner, wherein the bearing is formed between the housing and the rotor in the region of the sealing channel (11).

8. Compressor according to one of the preceding claims, wherein at least part of the housing (2) and/or of the rotor (3) that adjoins the sealing channel (11) takes the form of a sealing element (17), wherein the sealing element (17) is formed from a softer material than the housing (2) or the rotor (3).

9. Compressor according to one of the preceding claims, wherein, in a cross section through the axis of rotation (4), the housing (2) and/or the rotor (3) have or has, in the region of the sealing channel (11), an asymmetrical shape with respect to a centre plane (100) of the sealing channel (11).

## Revendications

1. Compresseur (1) avec un boîtier (2) et avec un rotor (3), le rotor (3) présentant au moins sur un côté une première roue de compresseur (5), le rotor (3) présentant sur un deuxième côté une deuxième roue de compresseur (13), une chambre de compresseur (6, 14) étant respectivement réalisée entre les roues de compresseur (5, 13) et le boîtier (2), le rotor (3) étant monté de manière rotative autour d'un axe de rotation (4), un canal d'étanchéité annulaire (11) étant réalisé entre le rotor (3) et le boîtier (2), le canal d'étanchéité (11) étant guidé de la deuxième chambre de compresseur (14) à la première chambre de compresseur (6) à une pression plus basse (2, 104), une section d'étranglement (101) étant prévue dans le canal d'étanchéité (11), la section d'étranglement (101) étant agencée plus près de la zone de basse pression (12, 104) de la première chambre de compresseur (6) que de la deuxième chambre de compression (14), la première roue de compresseur (5) étant réalisée sur un premier côté du rotor (3), la deuxième roue de compresseur (13) étant réalisée sur un deuxième côté du rotor (3), la première roue de compresseur (5) et la deuxième roue de compresseur (13) constituant un premier étage de compresseur et un deuxième étage de compresseur, la surface de section transversale (103) du canal d'étanchéité (11) diminuant continuellement en partant d'un côté de haute pression (102) dans la direction d'écoulement (23) en direction de la section d'étranglement (101) et, après la section d'étranglement (101), la surface de section transversale (103) du canal d'étanchéité (11) augmentant continuellement en direction d'un côté de basse pression (104).

2. Compresseur (1) avec un boîtier (2) et avec un rotor (3), le rotor (3) présentant au moins sur un côté une première roue de compresseur (5), le rotor (3) présentant sur un deuxième côté une deuxième roue de compresseur (13), une chambre de compresseur (6, 14) étant respectivement réalisée entre les roues de compresseur (5, 13) et le boîtier (2), le rotor (3) étant monté de manière rotative autour d'un axe de rotation (4), un canal d'étanchéité annulaire (11) étant réalisé entre le rotor (3) et le boîtier (2), le canal d'étanchéité (11) étant guidé de la deuxième chambre de compresseur (14) à la première chambre de compresseur (6) à une pression plus basse (2, 104), une section d'étranglement (101) étant prévue dans le canal d'étanchéité (11), la section d'étranglement (101) étant agencée plus près de la zone de basse pression (12, 104) de la première chambre de compresseur (6) que de la deuxième chambre de compression (14), la première roue de compresseur (5) étant réalisée sur un premier côté du rotor (3), la deuxième roue de compresseur (13) étant réalisée sur un deuxième côté du rotor (3), la première roue de compresseur (5) et la deuxième roue de compresseur (13) constituant un premier étage de compresseur et un deuxième étage de compresseur, le canal d'étanchéité (11) étant réalisé de telle sorte que la section d'étranglement (101) est agencée à l'extrémité du canal d'étanchéité (11) sur le côté de basse pression (104) et la surface de section transversale (103) du canal d'étanchéité (11) diminue continuellement depuis un côté de haute pression (102) en direction du côté de basse pression (104).

3. Compresseur selon la revendication 1, la section d'étranglement (101) étant agencée de manière adjacente au centre (100) du canal d'étanchéité (11) dans un premier tiers d'une deuxième moitié du canal d'étanchéité (11) plus proche de la zone de basse pression (104).

4. Compresseur selon l'une quelconque des revendications précédentes, le rotor (3) présentant une rainure périphérique (28) dans le canal d'étanchéité (11), le boîtier présentant une nervure périphérique (24), la nervure (24) s'engageant dans la rainure périphérique (28), et la nervure (24) et/ou la rainure (28) étant réalisée sous forme asymétrique par rapport à un plan médian (100) de la rainure (28) de telle sorte que la section d'étranglement (101) est agencée plus près de la zone de basse pression (104).

5. Compresseur selon l'une quelconque des revendications 1 à 3, le boîtier (2) présentant une rainure périphérique (28), le rotor (3) présentant une nervure périphérique (24), la nervure (24) s'engageant dans la rainure périphérique (28), le canal d'étanchéité (11) étant formé entre la nervure (24) et la rainure (28), et la nervure (24) et/ou la rainure (28) étant réalisées sous forme asymétrique par rapport à un plan médian de la rainure de telle sorte que la section d'étranglement (101) est agencée plus près de la zone de basse pression (12, 104).

6. Compresseur selon l'une quelconque des revendications 4 ou 5, la nervure (24) étant délimitée latéralement par deux épaulements annulaires (18, 19), le premier épaulement (18) étant adjacent à une zone de basse pression (104), le deuxième épaulement (19) étant adjacent à une zone de haute pression (6, 102), le premier épaulement (18) présentant une distance radiale plus grande par rapport à l'axe de rotation (4) que le deuxième épaulement (19).

7. Compresseur selon l'une quelconque des revendications précédentes, le rotor (3) étant monté de manière rotative sans contact sur un palier, le palier étant réalisé entre le boîtier et le rotor dans la zone du canal d'étanchéité (11).

8. Compresseur selon l'une quelconque des revendications précédentes, au moins une partie du boîtier (2) et/ou du rotor (3), qui est adjacente au canal d'étanchéité (11), étant réalisée sous la forme d'un élément d'étanchéité (17), l'élément d'étanchéité (17) étant réalisé dans un matériau plus souple que le boîtier (2) ou le rotor (3).

9. Compresseur selon l'une quelconque des revendications précédentes, dans une section transversale passant par l'axe de rotation (4), le boîtier (2) et/ou le rotor (3) présentant, dans la zone du canal d'étanchéité (11), une forme asymétrique par rapport à un plan médian (100) du canal d'étanchéité (11) .
